**Europäisches Patentamt**

**European Patent Office**

**Office européen des brevets**

(19)

(11) Veröffentlichungsnummer: **0 170 060**

**A2**

(12) # EUROPÄISCHE PATENTANMELDUNG

(21) Anmeldenummer: **85107980.6**

(51) Int. Cl.⁴: **G 10 K 11/16**

(22) Anmeldetag: **27.06.85**

(30) Priorität: **28.07.84 DE 3427916**

(43) Veröffentlichungstag der Anmeldung:
**05.02.86 Patentblatt 86/6**

(84) Benannte Vertragsstaaten:
**FR GB IT**

(71) Anmelder: **Magnetfabrik Bonn GmbH vorm.
Gewerkschaft Windhorst
Dorothenstrasse 215
D-5300 Bonn 1(DE)**

(72) Erfinder: **Müller, Werner
Grubenstrasse 62
D-5300 Bonn 1(DE)**

(74) Vertreter: **Schwarz, Klaus-Jürgen, Dipl.-Ing.
Adenauerallee 46a
D-5300 Bonn 1(DE)**

(54) **Mehrschichtige Dämm- und/oder Dämpfungsplatte mit magnetischen Eigenschaften.**

(57) Bei einer mehrschichtigen Dämm- und/oder Dämpfungsplate (1) mit magnetischen Eigenschaften aus Gummi und/oder einem gummiartigen flexbilen Material in Kunststoffbindung, die insbesondere zur Lärmminderung und Körperschallreduzierung bestimmt ist, besteht eine außenliegende Schicht (1a) aus einem flexiblen Dauermagnetwerkstoff. Mindestens eine zweite oder noch eine weitere außenliegende Schicht (1b), die der Schicht (1a) aus flexiblem Dauermagnetwerkstoff gegenüberliegt, weist eine Fe-Pulverfüllung auf. Hierdurch ist es möglich, derartige Dämm-und/oder Dämpfungsplatten wahlweise auf Bleche (4, 4a) aus magnetisierbarem oder unmagnetisierbarem Material auszulegen. Im ersteren Falle haften die Platten auf dem Blech aufgrund der magnetischen Eigenschaften der flexiblen Schicht (1a) aus Dauermagnetwerkstoff, während die Platten im zweiten Falle mit ihrer magnetisierbaren Fe-gefüllten Schicht (1b) auf die zu bearbeitenden Platten aus nichtmagnetisierbarem Material aufgelegt und daran durch Haftmagnete (1', 5) an der gegenüberliegenden Plattenseite festgehalten werden. Derartige Dämm- und/oder Dämpfungsplatten können ganz nach Bedarf mehrlagig aufeinandergeschichtet werden.

FIG.1

Croydon Printing Company Ltd.

0170060

Akten-Nr.: 71 703/85

Anmelder:    Magnetfabrik Bonn GmbH vorm. Gewerkschaft Windhorst, Dorotheenstraße 215,
5300 Bonn 1, Bundesrepublik Deutschland

### Mehrschichtige Dämm- und/oder Dämpfungsplatte mit magnetischen Eigenschaften

Die Erfindung betrifft eine mehrschichtige Dämm- und/oder Dämpfungsplatte mit magnetischen Eigenschaften nach dem Oberbegriff des Anspruches 1.

Insbesondere bei der Blechbe- und -verarbeitung werden sehr hohe, zumeist kurzzeitige, impulsförmig auftretende Schallpegel durch Körperschallabstrahlung erzeugt. Das bearbeitete Werkstück wird durch den Bearbeitungsvorgang in Schwingungen versetzt und der erzeugte Körperschall wird an den Oberflächen des Werkstückes als Luftschall abgestrahlt. Da die Bearbeitungsvorgänge nur in seltenen Fällen durch andersartige Bearbeitungsmaßnahmen ersetzt werden können, kann eine Lärmminderung nur durch körperschalldämmende Materialien erzielt werden.

Derartige körperschalldämpfende oder körperschalldämmende Materialien haben die Aufgabe, die Ausbreitung von Biegewellen auf wenig gedämpften Strukturen zu verhindern oder doch wesentlich zu verringern. Die Dämpfung bewirkt eine Abnahme der fortlaufenden Biegewellen. Dadurch ergibt sich eine geringere Körperschallabstrahlung und gleichzeitig eine Minderung des Lärmpegels.

Bei der Körperschalldämpfung oder -dämmung handelt es sich um eine Umwandlung mechanischer Energie in Wärme. Zur Entdröhnung oder Körperschalldämpfung kann auf das vibrierende Blech ein Dämpfungsbelag aufgebracht werden, der die Schwingungsenergie aufnimmt und in Wärme umwandelt.

Es ist bereits bekannt, Dämmplatten aus flexiblem Werkstoff auf bereits bearbeitete oder noch zu verarbeitende Bleche aufzukleben. Dies ist jedoch verhältnismäßig umständlich und führt häufig zu Schwierigkeiten bei der Wahl geeigneter Klebstoffe.

Um diese Schwierigkeiten zu vermeiden, ist es auch bereits bekannt, für die Körperschalldämmung bei der Bearbeitung oder bei der Installation von Eisen- und Stahlblechen Dämmbeläge mit magnetischen Eigenschaften, und zwar magnetisch haftende Kunststoffmatten bzw. Magnetfolien, zu verwenden, die auf die Bleche aufgelegt werden und an diesen von selbst haften.

Dabei wurden auch mehrschichtige Dämm- und/oder Dämpfungsplatten verwendet, die außer einer Magnetschicht auch noch eine weitere Schicht aus Gummi und/oder einem gummiartigen flexiblen Dämmaterial in Kunststoffbindung hatten.

Die Einsatzmöglichkeiten derartiger Dämm- und/oder Dämpfungsplatten sind jedoch insofern verhältnismäßig begrenzt, als zur Erzielung unterschiedlicher Dämm- und Dämpfungswirkungen jeweils unterschiedlich starke Dämm- und/oder Dämpfungsplatten verwendet werden müssen.

Der Erfindung liegt die Aufgabe zugrunde, diese Schwierigkeiten zu vermeiden und eine mehrschichtige Dämm- und/oder Dämpfungsplatte nach dem Oberbegriff des Anspruches 1 so

- 3 -

0170060

auszubilden, daß sie ohne weiteres den vielfältigen und unterschiedlichen Anforderungen angepaßt werden kann.

Diese Aufgabe wird erfindungsgemäß durch den Kennzeichnungsteil des Patentanspruches gelöst.

Dadurch, daß die zweite oder eine weitere außenliegende Schicht der Dämm- und/oder Dämpfungsplatte eine magnetisierbare Fe-Pulverfüllung aufweist, ergeben sich vielfältige Anwendungsmöglichkeiten. So kann eine derartige Dämm- und/ oder Dämpfungsplatte mit ihrer dünneren Magnetschicht auf ein Blech aus magnetisierbarem Material aufgelegt werden und haftet an diesem von selbst. Ist eine größere Dämm- oder Dämpfungswirkung erforderlich, so können mehrere derartige Platten im Huckepack-System übereinandergestapelt werden. Alle Platten haften dann abwechselnd jeweils mit ihren magnetischen und mit ihren magnetisierbaren Schichten aneinander.

Die Fe-Füllung der eigentlichen Dämmschicht der Platte bietet aber auch den weiteren Vorteil, daß derartige Dämm- und/oder Dämpfungsplatten mit dieser Fe-gefüllten Dämmschicht auf eine Platte oder ein Blech aus nichtmagnetisierbarem Material, wie Aluminium, aufgelegt und durch unterhalb des Bleches angeordnete Haftmagnete, vorzugsweise gleichartige erfindungsgemäße Magnetplatten, aber auch durch Dauer- oder Elektromagnete festgehalten werden können. Auch hierbei ist ein Übereinanderstapeln mehrerer derartiger Platten ohne weiteres möglich, wobei diese allerdings im Huckepack-System jeweils mit ihrer Fe-gefüllten Dämmschicht den Haftmagneten zugewandt sind.

Von besonderem Vorteil ist die sehr hohe Flexibilität derartiger Dämm- und/oder Dämpfungsplatten und die damit verbundene satte Anlagemöglichkeit auch an unterschiedlich gekrümmten Anlageflächen. Die verschiedenen Nutzungsarten erlauben den Einsatz derartiger Dämm- und/oder Dämpfungsplatten in vielen Variationen, die jeweils den geforderten Arbeitsplatzbedingungen angepaßt werden können.

Ein bevorzugtes Ausführungsbeispiel der Erfindung ist in der Zeichnung schematisch dargestellt, wobei auch verschiedene Anwendungsmöglichkeiten derartiger Dämm- und/oder Dämpfungsplatten aufgezeigt sind. Es zeigen

Fig. 1    eine erfindungsgemäße Dämm- und/oder Dämpfungsplatte auf einer magnetisierbaren Schicht oder Platte in perspektivischer Ansicht,

Fig. 2    einen senkrechten Schnitt durch die Dämm- und/oder Dämpfungsplatte gemäß Schnittlinie II - II von Fig. 1,

Fig. 3    eine weitere Anwendungsmöglichkeit für eine derartige Dämm- und/oder Dämpfungsplatte,

Fig. 4    noch eine weitere Anwendungsmöglichkeit,

Fig. 5    eine weitere Anwendungsmöglichkeit einer derartigen Dämm- und/oder Dämpfungsplatte in Verbindung mit einer Platte aus nichtmagnetisierbarem Material, wie Leichtmetall oder Aluminium,

Fig. 6    eine abgewandelte weitere Verwendungsmöglichkeit einer derartigen Dämm- und/oder Dämpfungsplatte bei der Dämmung von Aluminiumblech und

Fig. 7    noch eine weitere Verwendungsmöglichkeit.

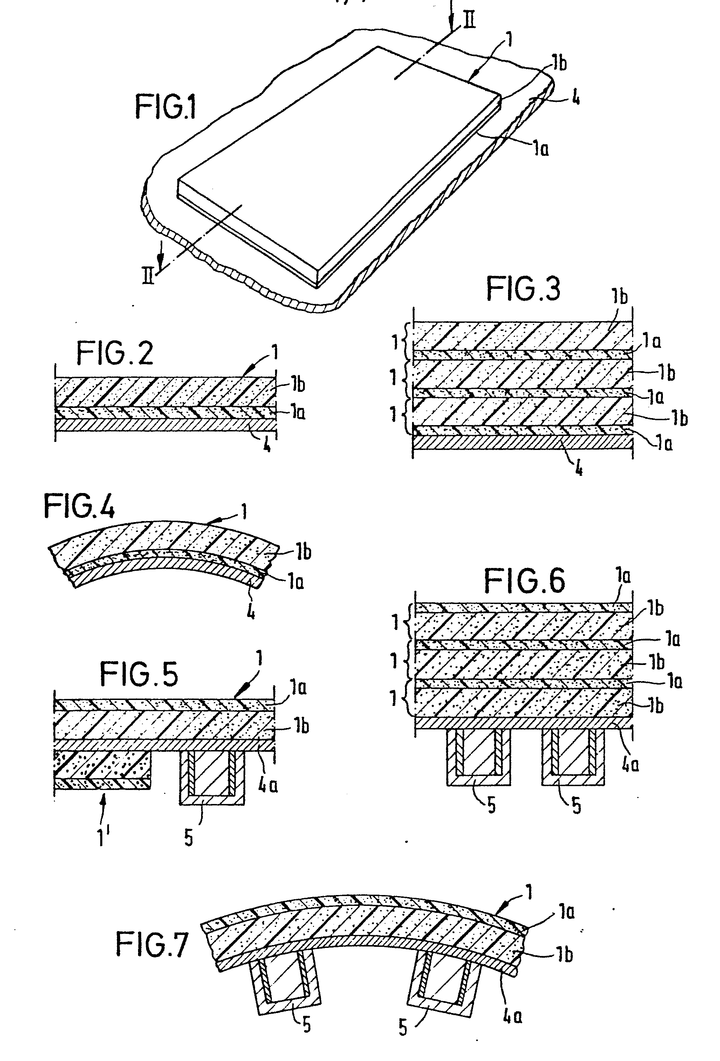

Bei dem in Fig. 1 gezeigten Ausführungsbeispiel liegt eine Dämm- und/oder Dämpfungsplatte 1 mit magnetischen Eigenschaften auf einem zu bearbeitenden Stahlblech 4 auf, das ebenfalls magnetisierbar ist.

Diese Dämm- und/oder Dämpfungsplatte 1 ist, wie die Schnittdarstellung von Fig. 2 zeigt, zweischichtig und hat eine erste - mit Dauermagnetwerkstoff ausgestattete und einseitig mehrpolig magnetisierte - Schicht 1a aus einem flexiblen Dauermagnetwerkstoff in Gummi- oder Kunststoffbindung mit Dauermagnetpulver in isotroper oder anisotroper Ausführung. Die zweite Schicht 1b, die als Dämmschicht dient und mindestens die gleiche oder eine mehrfache Dicke der ersten Schicht 1a haben kann, besteht aus Gummi oder aus einer Kunststoffbindung mit einer Füllung aus Fe-Pulver und ist mit der ersten Schicht 1a fest verbunden. Es ist aber auch möglich, daß zwischen den beiden Schichten 1a und 1b noch eine weitere, in der Zeichnung nicht gezeigte Dämmschicht aus flexiblem Kunststoff, beispielsweise mit einer Schwerspatfüllung, angeordnet ist.

Wie die Ausführungsbeispiele von Fig. 3 bis 7 zeigen, kann eine derartige zwei- oder mehrschichtige Dämm- und/oder Dämpfungsplatte 1 in mehrfacher Hinsicht genutzt werden, und zwar erstens für eine Haftung auf allen magnetisierbaren Materialien über die dauermagnetische Schicht 1a mit der Gummi- oder Kunststoffbindung (Fig. 2 bis 4), während für die Haftung auf allen nichtmagnetisierbaren Materialien die Fe-gefüllte Schicht 1b in Gummi- oder Kunststoffbindung in Verbindung mit Haftmagneten, vorzugsweise in Form gleichartiger erfindungsgemäßer Magnetplatten 1', aber auch in Form von Dauermagneten, Dauermagnetsystemen oder Elektromagneten 5 in Frage kommt, wie dies in Fig. 5 bis 7 im einzelnen gezeigt ist.

Abgesehen von einer einfachen einlagigen Anwendung kommt die erfindungsgemäße zwei- oder mehrschichtige Dämm- und/ oder Dämpfungsplatte 1 auch für eine Haftung auf allen magnetisierbaren Materialien in mehreren Lagen in Frage. Dies stellt eine Art Huckepack-System dar, das in Fig. 3 gezeigt ist, wobei beispielsweise zwei, drei oder mehr derartige Dämm- und/oder Dämpfungsplatten 1 aufeinandergelegt sein können und mit ihren Schichten 1a, 1b jeweils abwechselnd an- einander haften. Ein derartiges Huckepack-System kann überall dort zur Anwendung kommen, wo eine einzige Dämm- und/oder Dämpfungsplatte 1 nicht ausreicht, sondern die Dämmwirkung durch Übereinanderstapeln mehrerer derartiger zwei- oder mehrschichtiger Dämm- und/oder Dämpfungsplatten 1 noch verbessert werden soll. Beim Vorhandensein unterschiedlich dicker Dämm- und/ oder Dämpfungsplatten 1 - auch solcher mit einer zusätzlichen Dämmschicht mit einer Schwerspatfüllung oder dergleichen - können diese selbstverständlich ebenso aufeinandergestapelt werden.

Eine derartige zwei- oder mehrschichtige Dämm- und/oder Dämpfungsplatte 1 kommt aber auch für die Haftung auf allen nichtmagnetisierbaren Materialien in Verbindung mit Haftmagneten, wie erfindungsgemäße Magnetplatten 1', Dauermagnete, Dauermagnetsysteme oder in Verbindung mit Elektromagneten 5 in mehreren Lagen in Frage, wie dies in Fig. 6 der Zeichnung gezeigt ist. Ebenso wie in Fig. 5 und 7, wo die Dämm- und/ oder Dämpfungsplatte 1 auf einem ebenen Aluminiumblech 4a bzw. auf einem gewölbten Blech aus nichtmagnetisierbarem Material aufliegt, ist dabei allerdings die Fe-gefüllte Schicht 1b den unterhalb des Bleches 4a angeordneten Haftmagneten 1', 5 zugewandt, so daß bei dem in Fig. 6 gezeigten Huckepack-System die aufeinandergelegten Platten 1 jeweils mit ihren Schichten 1a und 1b aneinander haften.

Wie insbesondere Fig. 4 und 7 der Zeichnung erkennen lassen, können derartige Dämm- und/oder Dämpfungsplatten 1 mit magnetischen Eigenschaften nicht nur auf ebene Blechplatten 4, 4a aufgelegt werden, sondern auch auf gewölbte Blechbahnen, Abdeckungen und dergleichen, wobei dann ebenso wie in Fig. 5 und 6 bei einer Verwendung von unmagnetischen Blechen an der Unterseite der zu bearbeitenden Metallschicht bzw. des Bleches ein oder mehrere Haftmagnete, vorzugsweise gleichartige erfindungsgemäße Magnetplatten 1', aber auch Dauer- oder Elektromagnete 5 angeordnet sein können, die die Dämm- und/oder Dämpfungsplatte bzw. Platten 1 an der gegenüberliegenden Seite des zu bearbeitenden Bleches 4a festhalten.

Derartige Dämm- und Dämpfungsplatten sind bei vielen Werkstattarbeiten einsetzbar, bei denen Lärmschutzmaßnahmen erforderlich sind, z.B. beim Hämmern, Richten, Schleifen, Nieten, Lochen, Bohren und dergleichen.

Der Einsatz beschränkt sich allerdings nicht auf die Fertigung. Der Belag ist als hochwertiger Dämpfungsbelag grundsätzlich zur Geräuschminderung bei Körperschallproblemen einzusetzen. Überall dort, wo Wechselkräfte zu einer Anregung von Strukturen führen und durch Körperschallabstrahlung hohe Schallpegel auftreten, ist der Belag zur Lärmminderung effektiv einzusetzen. Die Vibrationspegel auf den Strukturen werden durch den Lärmschutzbelag stark gemindert. Der Belag ist auch bei großen Wanddicken einzusetzen, wodurch dann eine höhere Pegelminderung durch mehrere übereinandergeschichtete Lärmschutzplatten erreicht wird.

Patentanspruch

Mehrschichtige Dämm- und/oder Dämpfungsplatte mit magnetischen Eigenschaften aus Gummi und/oder gummiartigem flexiblen Material in Kunststoffbindung, insbesondere zur Lärmminderung und Körperschallreduzierung, wobei eine außenliegende Schicht aus einem flexiblen Dauermagnetwerkstoff und mindestens eine zweite Schicht aus Gummi oder aus einem gummiartigen flexiblen Material in Kunststoffbindung besteht, d a d u r c h   g e k e n n z e i c h n e t , daß diese zweite oder eine weitere außenliegende, der Schicht aus flexiblem Dauermagnetwerkstoff gegenüberliegende Schicht (1b) eine Fe-Pulverfüllung aufweist.

- 1/1 -

0170060

FIG.1

FIG.2

FIG.3

FIG.4

FIG.5

FIG.6

FIG.7

71 703/85